# EUROPEAN PATENT SPECIFICATION

(11) **EP 0 899 547 B1**
(45) Date of publication and mention of the grant of the patent: **11.01.2006**
(21) Application number: 98116133.4
(22) Date of filing: 26.08.1998
(51) Int. Cl.: G01J 1/04

(54) **A lens for a light detector**
Linse für Lichtdetektor
Lentille pour détecteur de lumière

(30) Priority: 26.08.1997 JP 22941097
(43) Date of publication of application: 03.03.1999
(73) Proprietor: Stanley Electric Co., Ltd., Meguro-ku Tokyo 153-8636 (JP)
(72) Inventor: Tanaka, Kozo, Haitsu-Kitanosawa 203, Kanagawa 259-1322 (JP); Kamiyama, Hideyuki, c/o Stanley Electric Co.,Ltd., Tokyo 153-8636 (JP)
(74) Representative: Geyer, Ulrich F.

(56) References cited:
- EP-A- 0 384 353
- JP-A- 5 232 581
- US-A- 5 359 189
- US-A- 5 497 229
- PATENT ABSTRACTS OF JAPAN vol. 015, no. 196 (P-1203), 21 May 1991 & JP 03 046590 A (MATSUSHITA ELECTRIC WORKS LTD), 27 February 1991

## Description

### BACKGROUND OF THE INVENTION

### Field of the invention

The present invention relates to a light detector and more particularly to a converging lens to collect light emitted from different directions on a light detecting surface allowing to reduce an overall size of the light detector.

### Discussion of the related art

A light detector for use as a photo diode, or the like, is preferred to have a larger converging lens to obtain high converting efficiency from light to electric power.

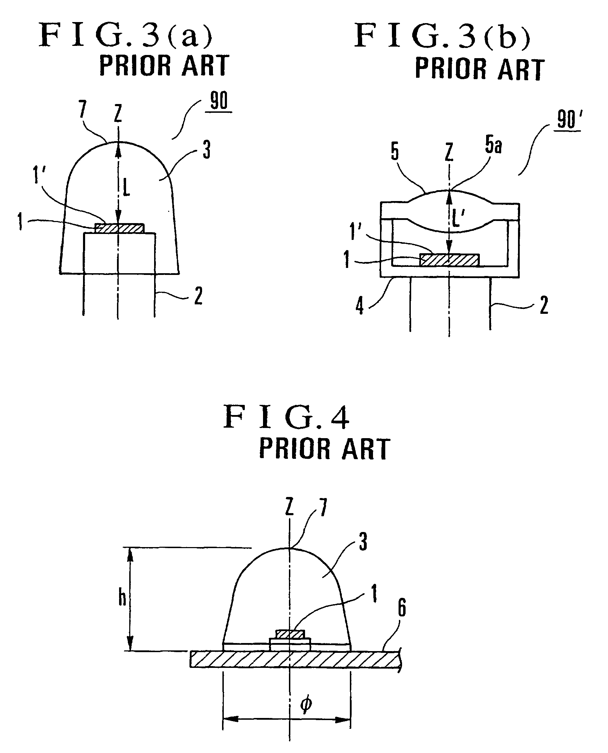

FIG. 3(a) is a cross sectional view along a longitudinal axis Z of a conventional light detector 90 having a lens 3 formed by resin molding, and FIG.3(b) is a cross sectional view along an axis Z in a focusing direction of another conventional light detector 90' whose encasement is a combination of a cylindrical case 4 having an aperture on its one end, and a converging lens 5 covering the aperture.

The light detector 90 comprises a photo sensing chip 1 having a light detecting surface 1', at least one electrode 2 connected to the photo sensing chip 1, and a lens 3 having a spherically or non-spherically curved end 7. In this design, directivity is determined by a distance L from the light detecting surface 1' of the photo sensing chip 1 to the curved end 7 of the lens 3 and a radius of curvature of the curved end 7. In order to obtain increased light detection output while keeping the directivity, a larger lens 3 is used.

The conventional light detector 90' comprises a photo sensing chip 1 having a light detecting surface 1', at least one electrode 2 connected to the photo sensing chip 1, a cylindrical case 4 having an aperture on its one end, and a converging lens 5 covering the aperture. In this design, the length L' from the light detecting surface 1' of a photo sensing chip 1 to a top portion 5a on a convex surface of the converging lens 5 is smaller than the length L of Fig. 3(a), which allows a reduction of the overall size of the light detector 90'.

The conventional light detectors 90 and 90' have the following disadvantages. First, when the photo sensing chip 1 and a lens 3 are mounted on a substrate 6 as shown in Fig. 4, it is difficult to obtain sufficient directivity and a sufficient amount of light incident onto the lens 3 when the height h from the substrate 6 to the curved end 7 of the lens 3 is limited to within specific values.

The design of the light detector 90 minimizes the percentage of undetected incident light rays, since the lens 3 is not a combination of a lens and a case but just a lens. However, since the directivity is determined by the distance L from the light detecting surface 1' of the photo sensing chip 1 to the curved end 7 of the lens 3 and radius of curvature of the curved end 7 of the lens 3, the diameter of the lens 3 has to be enlarged in order to detect a sufficient amount of the incident light while keeping sufficient directivity. Accordingly, the height h also has to be enlarged.

Second, in the light detector 90', transmitting efficiency of the incident light through the lens 3 is low, because air is present between the light detecting surface 1' of the photo sensing chip 1 and the converging lens 5.

Third, the design of the light detector 90' is not suitable for reflow mounting.

Patent Abstracts of Japan vol. 015, no. 196 (P-1203), 21 May 1991 & JP 03 046590 A (MATSUSHITA ELECTRIC WORKS LTD), 27 February 1991 relate to a human body detector which can be attached to a ceiling surface. Thus, a person being a heat source which exists at a prescribed height or above can be detected, and the detection of a small animal being a heat source in the vicinity of the floor surface can be eliminated. The human body detector can thus discriminate a person and a small animal in any direction by setting a focal distance of a lens provided in the vicinity of a normal set up in the centre of the hot-wire sensor detecting surface so as to be shorter than that of a lens provided by separating it from the normal. Specifically, the human body detector comprises four pieces of lenses in which an inclination angle of an optical axis is small against a normal set up in the centre of the hot-wire sensor detecting surface, and eight pieces of lenses, in which the inclination angle is large. The first mentioned lenses are provided on the bottom face of a recess part formed in the cover near the sensor. Accordingly, the detection range from the sensor becomes short in the front direction, becomes long in other directions than the front, and as a result, the distance extending from a fitting surface of the sensor to a borderline of the detection range can be roughly equalized.

European Patent Application EP 0 384 353 (OMRON₂ CORPORATION refers to a reflecfive-type photoelectric switch comprising a light-receiving Fresnel lens disposed in front of a light-receiving element. By constructing the light-receiving lens as a Fresnel lens, lens thickness can be reduced and the light-receiving optical system can be miniaturised.

### SUMMARY OF THE INVENTION

The present invention is directed to a light detector that substantially obviates one or more of the above limitations and disadvantages of the related art.

It is an object of the invention to provide a light detector that enables a reduction of its overall size while detecting a sufficient amount of the incident light and maintaining sufficient directivity, and wherein the design of the light detector is suitable for mounting the light detector on a substrate even under strict dimension limits.

The present invention provides a light detector comprising the features of claim 1.

In another aspect of the invention, a flat surface is further arranged between the central spherically curved surface and the peripheral spherically curved surface.

In accordance with the invention, the lens is comprised of just one lens element and is formed by resin molding.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated into and thus constitute a part of the specification, illustrate embodiments of the invention and, together with the description, serve to elucidate the principles of the invention.

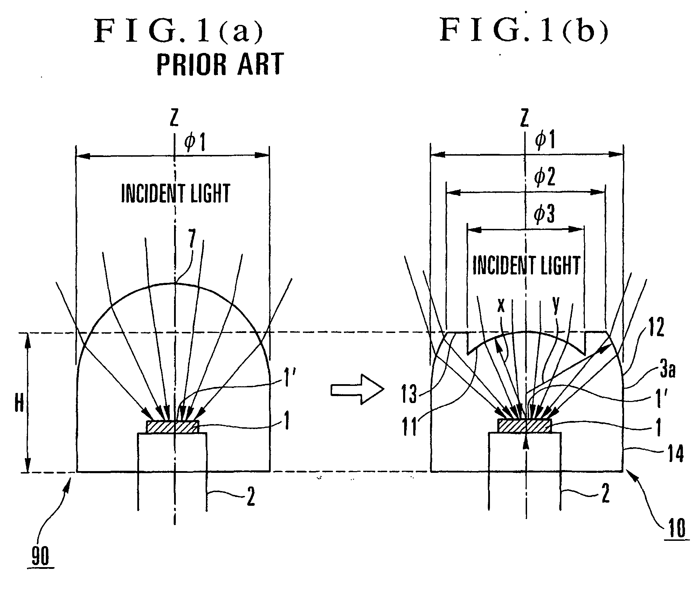

Figs. 1(a) and 1(b) are illustrations comparing a conventional light detector with the first preferred embodiment of the present invention.
Fig. 1(a) illustrates a cross sectional view along a lens axis Z of a first conventional light detector.
Fig. 1(b) illustrates a cross sectional view along a lens axis Z of the first preferred embodiment of the present invention.
Fig. 2(a) illustrates a cross sectional view along a lens axis Z of the second preferred embodiment of the present invention.
Fig. 2(b) illustrates a cross sectional view along a lens axis Z of the third preferred embodiment of the present invention.
Fig. 2(c) illustrates a cross sectional view along a lens axis Z of an example of a light detector.
Fig. 3(a) illustrates a cross sectional view along a lens axis Z of the first conventional light detector.
Fig. 3(b) illustrates a cross sectional view along a lens axis Z of a second conventional light detector.
Fig. 4 illustrates a cross sectional view along a lens axis Z of the first conventional light detector when it is mounted on a substrate.

### DETAILED DESCRIPTION OF THE PREFERRED EMBODIMENTS

Reference will now be made in detail to the preferred embodiments of the present invention, examples of which are illustrated in the accompanying drawings.

Fig. 1(a) illustrates a cross sectional view along a lens axis Z of a conventional light detector 90, and Fig. 1(b) illustrates a cross sectional view along a lens axis Z of the first preferred embodiment of the present invention.

The light detector 10 in Fig. 1(b) comprises a photo sensing chip 1 having a light detecting surface 1', at least one electrode 2 connected to the photo sensing chip 1, a lens 3a comprising a cylindrical portion 14, a central spherically curved surface 11 having a radius of curvature x, a peripheral spherically curved surface 12 having a radius of curvature y, and a flat surface 13 between the central spherically curved surface 11 and the peripheral spherically curved surface 12. The central spherically curved surface 11, the peripheral spherically curved surface 12, and the flat surface 13 are formed on a cylindrical end opposite the light detecting surface 1' and the electrode 2. Diameter Φ1 of the lens 3a is larger than the internal diameter Φ2 of the peripheral spherically curved surface 12, and the internal diameter Φ2 is equal to or larger than diameter Φ3 of the central spherically curved surface 11. The radius of curvature x of the central spherically curved surface 11 is equal to or different from the radius of curvature y of the peripheral spherically curved surface 12. The centers of curvature of the respective curved surfaces both lie along the lens axis Z. The flat surface 13 between the internal diameter Φ2 of the peripheral spherically curved surface 12 and the diameter Φ3 of the central spherically curved surface 11 is configured to facilitate handling with resin, the raw material of the lens 3a, during the manufacturing process, and for achieving sufficient strength of the lens 3a.

The operational advantages of the light detector 10 according to a first preferred embodiment of the present invention will now be described. Firstly, overall size reduction of the light detector 10 is achieved while maintaining predetermined directivity and ensuring sufficient amount of incident light. This design is suitable for cases in which the light detector 10 is mounted on a substrate in accordance with strict dimension limits. The length of the light detector 10 along the direction of focus is the same as H, the maximum height for mounting the light detector 10 on a substrate. In the light detector 10, as shown in Fig. 1(b), directivity and the amount of incident light is determined by the radius of curvature x of the central spherically curved portion 11 and the radius of curvature y of the peripheral spherically curved portion 12. Directivity depends on the radius of curvature x of the central spherically curved surface 11, and the amount of incident light depends on the radius of curvature y of peripheral spherically curved surface 12. In a conventional light detector 90, the amount of incident light depends on the diameter of the lens 3, and its directivity depends on the radius of curvature y of the spherically or non-spherically curved end 7 of the lens 3. When the length H in the direction of focus is limited, it is difficult to obtain sufficient directivity, even if the diameter of the lens 3 is large enough, since the diameter of the lens 3 limits the radius of curvature y of the curved end 7 to a specific range.

Secondly, directivity is more flexibly determined. For example, high directivity is obtained by enlarging the radius of curvature x of the central spherically curved surface 11. In another example, high directivity is obtained by a combination of different radii of curvatures between the central spherically curved surface 11 and the peripheral spherically curved surface 12.

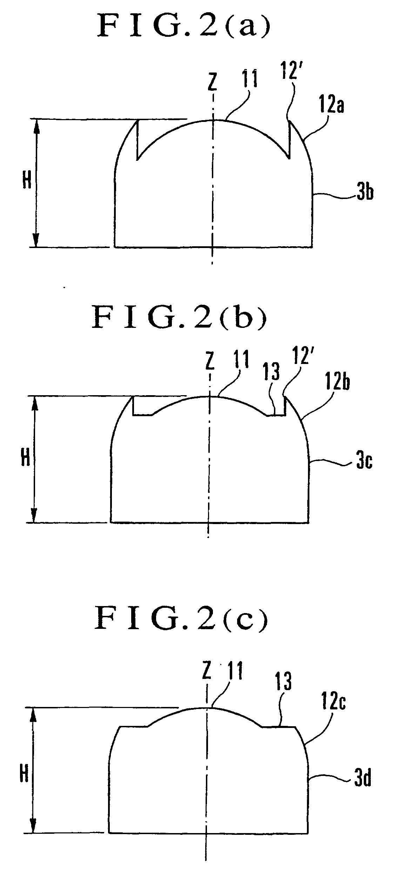

Figs. 2(a)-(b) illustrate second and third preferred embodiments of the present invention. In these embodiments, all other corresponding portions except the lens 3a have the same design as in the light detector 10, although they are not illustrated herein. In Fig. 2(a), the lens 3b has no corresponding portion to the flat surface 13. In the lens 3c of Fig. 2(b), the position of the flat surface 13 is different from in the lens 3a. During the manufacturing process of the lenses 3b and 3c, accuracy and strength is required for formation of the top portion 12' of peripheral spherically curved surfaces 12a and 12b. Fig. 2(c) shows a further example of a Light detector. In the lens 3d of Fig. 2(c), a peripheral spherically curved surface 12c has a smaller curved portion than the peripheral spherically curved surface 12, 12a or 12b. In this design, the amount of incident light is a little bit less than in other designs, but the manufacturing process is the simplest of all the lens designs described above.

It will be apparent to those skilled in the art that various changes and modifications can be made.

## Claims

1. A light detector (10) comprising a photo sensing chip (1) having a light detecting surface (1'), at least one electrode (2) connected to the photo sensing chip (1), and a cylindrical converging lens (3a-3c) having an incident surface (11, 12) to collect incident light from different directions to the light detecting surface (1'), the incident surface of the cylindrical converging lens (3a-3c) being opposite the light detecting surface (1') and the electrode (2), **characterized in that** the incident surface (11, 12) comprises:
a central spherically curved surface (11) having a first radius of curvature; and
a peripheral spherically curved surface (12) having a second radius of curvature and
surrounding said central spherical curved surface (11), and the centers of curvature of the respective curved surfaces both lie along the lens axis (Z); the cylindrical converging lens (3a-3c) is directly disposed on the photo sensing chip (1); and the top ends of the two curved surfaces are located on the same imaginary plane.

2. The light detector (10) of claim 1, **characterized in that** the internal diameter (Φ2) of the peripheral spherically curved surface (12a) is equal to the diameter (Φ3) of the central spherically curved surface (11).

3. The light detector (10) of claim 1, **characterized in that** the internal diameter (Φ2) of the peripheral spherically curved surface (12) is larger than the diameter (Φ3) of the central spherically curved surface (11).

4. The light detector (10) of claim 3, **characterized in that** the incident surface (11, 12) of the cylindrical converging lens (3a, 3c) further comprises a flat surface (13) arranged between the central spherically curved surface (11) and the peripheral spherically curved surface (12).

5. The light detector (10) of any of the preceding claims, **characterized in that** the cylindrical converging lens (3a-3c) is formed by resin molding.

## Revendications

1. Détecteur de lumière (10) comprenant une puce photodétectrice (1) ayant une surface de détection de lumière (1'), au moins une électrode (2) connectée à la puce photodétectrice et une lentille cylindrique convergente (3a-3c) ayant une surface d'incidence (11-12) pour recueillir de la lumière incidente en provenance de diverses directions vers la surface photodétectrice (1'), la surface d'incidence de la lentille cylindrique convergente (3a-3c) étant en face de la surface de détection de lumière (1') et de l'électrode (2), **caractérisé en ce que** la surface d'incidence (11, 12) comprend :
une surface centrale à courbure sphérique (11) ayant un premier rayon de courbure ; et
une surface périphérique à courbure sphérique (12) ayant un second rayon de courbure et entourant la surface centrale à courbure sphérique (11), et les centres de courbure des surfaces courbes respectives se trouvant tous les deux sur l'axe (Z) de la lentille ; la lentille cylindrique convergente (3a-3c) étant disposée directement sur la puce photodétectrice (1) et les extrémités supérieures des deux surfaces courbes étant situées sur le même plan imaginaire.

2. Détecteur de lumière (10) selon la revendication 1, **caractérisé en ce que** le diamètre interne (φ2) de la surface périphérique à courbure sphérique (12a) est égal au diamètre (φ3) de la surface centrale à courbure sphérique (11).

3. Détecteur de lumière (10) selon la revendication 1, **caractérisé en ce que** le diamètre interne (φ2) de la surface périphérique à courbure sphérique (12) est plus grand que le diamètre (φ3) de la surface centrale à courbure sphérique (11).

4. Détecteur de lumière (10) selon la revendication 3, **caractérisé en ce que** la surface d'incidence (11, 12) de la lentille cylindrique convergente (3a, 3c) comprend en outre une surface plane (13) disposée entre la surface centrale à courbure sphérique (11) et la surface périphérique à courbure sphérique (12).

5. Détecteur de lumière (10) selon l'une quelconque des revendications précédentes, **caractérisé en ce que** la lentille cylindrique convergente (3a-3c) est formée par moulage de résine.

## Patentansprüche

1. Ein Lichtdetektor (10), der folgendes aufweist: ein lichtabfühlendes Chip (photo sensing chip) (1) mit einer lichtdetektierenden Oberfläche (1'), mindestens eine Elektrode (2) verbunden mit dem lichtabfühlenden Chip (1) und eine zylindrische konvergierende Linse (3a-3c) mit einer Einfallsoberfläche (11, 12) zum Sammeln einfallenden Lichtes aus unterschiedlichen Richtungen zur lichtdetektierenden Oberfläche (1'), wobei die Einfallsoberfläche der zylindrischen konvergierenden Linse (3a-3c) entgegengesetzt zur lichtdetektierenden Oberfläche (1') und der Elektrode (2) vorgesehen ist, **dadurch gekennzeichnet, dass** die Einfallsoberfläche (11, 12) folgendes aufweist:
eine mittige sphärisch gekrümmte Oberfläche (11) mit einem ersten Krümmungsradius; und
eine sphärisch gekrümmte Umfangsoberfläche (12) mit einem zweiten Krümmungsradius und die mittige sphärisch gekrümmte Oberfläche (11) umgebend, und wobei ferner die Krümmungsmitten der entsprechenden gekrümmten Oberflächen beide entlang der Linsenachse (Z) verlaufen, und
wobei die zylindrische konvergierende Linse (3a-3c) direkt auf dem Lichtabfühlchip (1) angeordnet ist; und die oberen Enden der zwei gekrümmten Oberflächen auf der gleichen Imaginärebene angeordnet sind.

2. Lichtdetektor (10) nach Anspruch 1, **dadurch gekennzeichnet, dass** der Innendurchmesser (φ2) der sphärisch gekrümmten Umfangsoberfläche (12a) gleich dem Durchmesser (φ3) der mittigen sphärisch gekrümmten Oberfläche (11) ist.

3. Lichtdetektor (10) nach Anspruch 1, **dadurch gekennzeichnet, dass** der Innendurchmesser (φ2) der sphärisch gekrümmten Umfangsoberfläche (12) größer ist als der Durchmesser (φ3) der mittigen sphärisch gekrümmten Oberfläche (11).

4. Lichtdetektor (10) nach Anspruch 3, **dadurch gekennzeichnet, dass** die Einfallsoberfläche (11, 12) der zylindrischen konvergierenden Linse (3a, 3c) ferner eine flache Oberfläche (13) aufweist, und zwar angeordnet zwischen der mittigen sphärisch gekrümmten Oberfläche (11) und der sphärisch gekrümmten Umfangsoberfläche (12).

5. Lichtdetektor (10) nach einem der vorhergehenden Ansprüche, **dadurch gekennzeichnet, dass** die zylindrische konvergierende Linse (3a-3c) durch Harzformung gebildet ist.
